**Europäisches Patentamt**

**European Patent Office**

**Office européen des brevets**

(19)

(11) Numéro de publication: **0 052 091**
**A1**

(12) **.DEMANDE DE BREVET EUROPEEN**

(21) Numéro de dépôt: **81870046.0**

(22) Date de dépôt: **09.11.81**

(51) Int. Cl.³: **H 05 B 7/00,** G 05 F 3/06,
H 02 H 7/00, H 01 F 27/24

(30) Priorité: **11.11.80 EP 80201069**

(43) Date de publication de la demande: **19.05.82**
**Bulletin 82/20**

(84) Etats contractants désignés: **AT BE CH DE FR GB IT LI
LU NL SE**

(71) Demandeur: **ATELIERS DE CONSTRUCTIONS
ELECTRIQUES DE CHARLEROI (ACEC) Société
Anonyme, 54, Chaussée de Charleroi, B-1060 Bruxelles
(BE)**

(72) Inventeur: **Fortpied, Gérard, Terre L'Oreye, 2,
B-6100 Mont-sur-Marchienne (BE)**
Inventeur: **Gosselin, Roland, Chemin de Celle, 6,
B-6530 Thuin (BE)**
Inventeur: **George, Yves-Henri, Rue du Calvaire, 47,
B-6270 Loverval (BE)**

(54) **Dispositif de protection contre les courants d'arc excessifs.**

(57) Dispositif de protection contre les courants d'arc excessifs parcourant les électrodes (5) d'un four à arc (2) alimenté par un réseau électrique (1) par l'intermédiaire d'un transformateur de four (4). Ce dispositif de protection comprend un coordinateur (9) dont une première consigne contrôle l'intervention d'un régulateur de position (8) commandant un moteur (7) pour adapter la position de l'électrode (5) à la valeur d'impédance d'arc imposée et dont la deuxième consigne déclenche l'intervention automatique d'un transducteur (6) normalement saturé, inséré en série avec le primaire du transformateur de four (4), pour limiter le courant parcourant l'électrode (5) au seuil fixé par cette seconde consigne de coordinateur (9).

Ce dispositif comprend encore un répétiteur d'ordre (10) qui en collaboration avec le coordinateur (9) et le régulateur de position (8) déclenche la remontée en grande vitesse de l'électrode dans la phase où sont détectés simultanément la désaturation du transducteur (6) et la disparition de l'arc.

DISPOSITIF DE PROTECTION CONTRE LES COURANTS D'ARC EXCESSIFS.

Dans un four électrique à arc, lorsque le versement d'un nouveau panier de mitrailles est terminé, les électrodes descendent pour qu'un arc s'amorce entre chacune d'elles et les mitrailles. Durant les premiers instants de la fusion, il se produit dans le tas de mitrailles, aux environs immédiats de chaque électrode, un puits qui s'approfondit au fur et à mesure de la descente des électrodes. Durant cette période, il y a fréquemment des contacts de mitrailles sur l'électrode ou des chutes de mitrailles dans ses environs immédiats qui entraînent soit des court-circuits soit un raccourcissement important de l'arc se traduisant par des courants d'électrode excessifs. Ces surintensités conduisent à une consommation anormalement élevée d'électrodes de four, à des pertes par effet Joules accrues, à des composantes inverses élevées des courants et à un vieillissement prématuré de toute l'installation. De nombreux systèmes de protection ont été élaborés. Certains de ces dispositifs consistent en une régulation de l'impédance d'arc par le réglage de la position des électrodes. Dans les installations de four à arc équipées de ce dispositif, l'électrode est automatiquement remontée lorsque le courant la parcourant est excessif. Ces dispositifs, modifiant la position des électrodes, sont lents dans leur intervention et leur manque de souplesse conduit souvent au désamorçage de l'arc. L'arc doit alors se réamorcer et il en résulte une perte de temps et une réduction de productivité néfaste à la conduite économique des fours à arc.

D'autres dispositifs de sécurité consistent à insérer une réactance à prises multiples en série avec le transformateur du four. Ces dispositifs dégradent le facteur de puissance par une augmentation de la puissance réactive, créent des pertes de temps lors des commutations des différentes prises, demandent l'adjonction de réglage en charge et réduisent la puissance active maximum que peut développer l'installation et réclament des entretiens plus fréquents.

Enfin, les dispositifs les plus élaborés agissent, par exemple en cas de court-circuit sur une électrode, à la fois sur la position de l'électrode et sur la valeur du courant d'électrode. Parmi les dispositifs connus, certains font appel à des dispositifs électro-mécaniques dont le temps de réponse sont de l'ordre d'une dizaine de périodes pendant lesquelles les électrodes, soumises à un courant excessif, se

10.02/1867.

dégradent rapidement. D'autres encore utilisent des dispositifs à thyristors qui par leur mode d'intervention introduisent des harmoniques de courant difficiles à maîtriser.

La présente invention remédie à ces inconvénients en se fixant comme but premier la préservation maximum des électrodes par une intervention se rapprochant au maximum de la protection idéale.

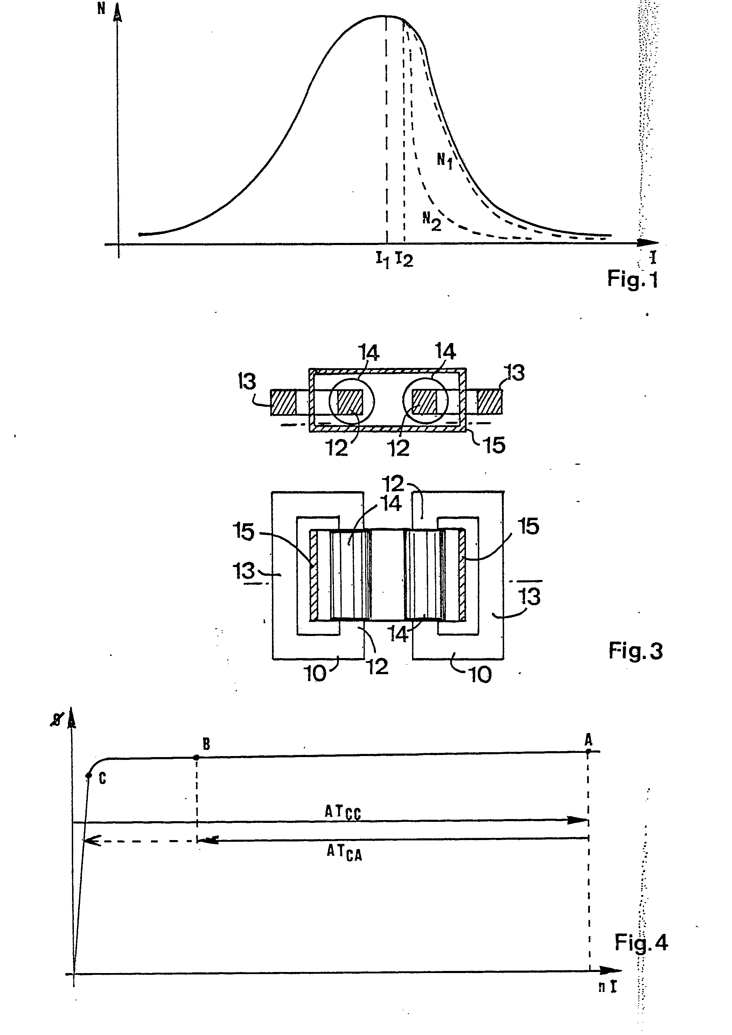

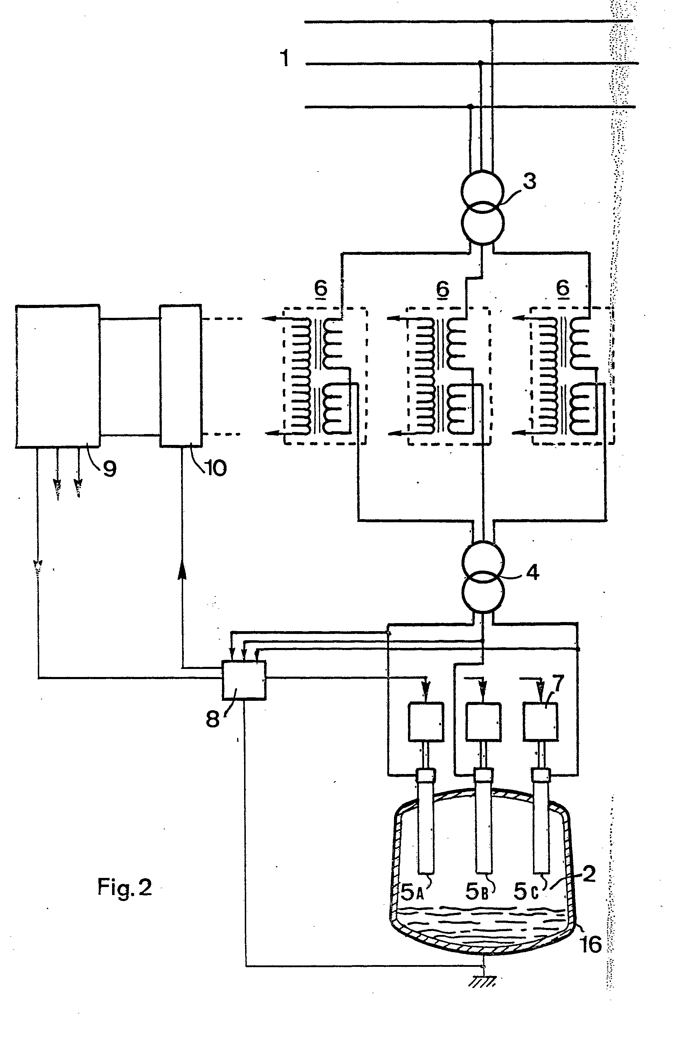

La figure 1 monte l'intérêt d'une intervention extrêment rapide par un diagramme donnant la répartition quantitative des arcs en fonction de la valeur du courant de ces arcs.

En $I_1$ se situe la valeur du courant nominal; ultérieurement appelée première consigne,

En $I_2$ se situe la valeur du seuil fixé comme courant maximum toléré dans l'électrode;ultérieurement appelée deuxième consigne,

En $N_1$ courbe de répartition modifiée par une protection à temps de réponse long,

En $N_2$ courbe de répartition modifiée par une protection à temps de réponse court.

Le dispositif de protection contre les courants d'arc excessifs, proposé dans l'invention agit en insérant, dans le circuit électrique, un dispositif limiteur de courant à intervention instantanée, dont l'action est proportionnée à l'écart constaté et qui coordonne son action avec un régulateur de position d'électrodes. Conjointement au régulateur de position, qui par déplacement d'électrodes, modifie lentement la résistance de l'arc en répondant à une première consigne imposant un courant nominal choisi, le dispositif limiteur de courant agit par insertion instantanée de la puissance réactive nécessaire à limiter le courant selon une seconde consigne fixant un seuil de courant de peu supérieur à la valeur nominale. En l'absence de surintensité cette puissance réactive est réduite à une valeur minimale. L'intervention instantanée s'exerce de façon continue et s'efface automatiquement lorsque la remontée de l'électrode substitue un accroissement de résistance de l' arc à l'accroissement d'inductance transitoirement réalisé.

Le fonctionnement du dispositif de protection proposé peut se résumer en trois phases distinctes. La première phase correspond à un déroulement normal de la fusion dans le four à arc; par exemple, il n'y a pas d'éboulement sur les électrodes ni dans les environs immédiats en conséquence il n'y a pas de courant excessif parcourant les électrodes.

Lorsque le courant parcourant l'électrode s'écarte de la valeur nominale, fixé dans une première consigne tout en restant inférieur au seuil fixé dans une seconde consigne pour déclencher l'intervention du limiteur de courant, seul le régulateur de position d'électrodes corrige cet écart en modifiant à vitesse normale la position d'électrode. Dans ce cas, le dispositif limiteur de courant est inopérant et sa présence dans le circuit électrique de puissance ne perturbe pratiquement pas celui-ci.

La seconde phase est celle qui caractérise l'intervention du dispositif limiteur de courant.

Dès que l'intensité du courant parcourant les électrodes dépasse un seuil prédéterminé fixé dans la seconde consigne, le dispositif limiteur de courant intervient pour ramener le courant d'électrode à ce seuil et pour éviter ainsi les conséquences néfastes précitées.

Son action se maintient naturellement pendant le temps nécessaire à la correction de la position des électrodes qui, commandées par des servo-moteurs à deux vitesses, se déplacent à allure accélérée pour allonger l'arc et ainsi augmenter la résistance de celui-ci.

La dernière phase démarre au moment où la position de l'électrode est telle que la résistance de l'arc peut, par elle-même, limiter à sa valeur nominale le courant qui la parcourt. Dès cet instant, l'action du dispositif limiteur de courant cesse et l'installation retrouve toute la puissance active nécessaire pour poursuivre le processus de fusion.

L'invention est exposée plus en détail à l'aide des figures 2, 3 et 4. La figure 2 représente un mode de réalisation, donné à titre d'exemple, dans lequel un réseau d'énergie électrique 1 alimente un four électrique à arc 2 par l'intermédiaire d'un transformateur abaisseur 3 et d'un transformateur de four 4. Un circuit électrique relie chaque électrode 5 du four à arc 2 à l'enroulement secondaire du transformateur de four 4. Un dispositif limiteur de courant 6 est inséré dans chaque phase du circuit reliant le secondaire du transformateur abaisseur 3 et le primaire du transformateur de four 4.

Les électrodes 5 peuvent être montées ou descendues par des moteurs 7 commandés par un régulateur de position 8

Les actions conjuguées du limiteur de courant 6 et du régulateur de position 8 sont assurées par un coordinateur 9 dont une première consigne impose le courant nominal et une seconde consigne fixe la valeur maximum du courant toléré dans chaque électrode 5. Entre le coordinateur 9 et le limiteur de courant 6 est inséré un répétiteur d'ordre 10 dont le rôle sera précisé ultérieurement.

Selon l'invention, le limiteur de courant est de préférence un transducteur monophasé 6 à couplage série inséré dans chaque phase du circuit d'alimentation du four à arc 2.

Par transducteur, il faut entendre un montage symétrique de deux noyaux magnétiques à saturation variable disposés de manière à éviter l'induction de force électro-motrice dans l'enroulement de commande.

La constitution du transducteur monophasé à couplage série est schématisé en figure 3. Ce dispositif est constitué de deux circuits magnétiques 11, possédant chacun un noyau saturable 12 et un circuit de retour non saturé 13.

Deux enroulements alternatifs 14 disposé chacun autour du noyau saturable 12 sont connectés entr'eux en série et en opposition.

Un enroulement à courant continu 15 commun aux deux circuits magnétiques 11 entoure les deux enroulements alternatifs 14 et constitue l'enroulement de commande.

La fonction essentielle du transducteur monophasé à couplage serré est de limiter le courant d'arc dès qu'il dépasse la seconde consigne du coordinateur 9. Ce résultat est obtenu en agissant sur le courant primaire du transformateur de four 4 qui, par couplage magnétique agit à son tour sur le courant d'électrode . Le coordinateur 9 est chargé de réaliser la conjugaison entre deux actions différentes agissant simultanément lorsque le courant d'électrode devient excessif. L'une de ces actions, l'insertion de puissance réactive, est immédaite et limite le courant d'électrode dès que celui-ci dépasse le seuil de la seconde consigne du coordinateur 9, fixé par exemple à une valeur de dix pour cent supérieure à la valeur nominale. L'autre action, la remontée d'électrode pour allonger l'arc et augmenter sa résistance, est commandée dès que le courant d'électrode s'écarte de la valeur nominale affichée comme première consigne dans le coordinateur 9.

Les enroulements de puissance du transducteur 6 sont traversés par le courant alternatif et constituent des bobines d'ampère-tours dont la force magnétomotrice totale joue le rôle de grandeur image mesurée.

Le second enroulement du transducteur, l'enroulement de commande, est traversé par un courant continu constant proportionnel au courant théorique d'électrode.

Par courant théorique d'électrode, il faut entendre le courant qui circule dans l'électrode lorsque l'impédance des arcs présente la valeur affichée au coordinateur 9 qui, par l'intermédiaire du régulateur de position 8, pilote les moteurs 7 pour déplacer les électrodes 5.

La constante de proportionnalité de ce courant continu est fondamentalement supérieure à 1 de manière à saturer complètement le noyau magnétique du transducteur pendant le foncitonnement normal. L'objectif spécifique est de rendre le transducteur inopérant aussi longtemps que les courants d'arc ne dépassent pas une limite prédéterminée.

Le transducteur intervient donc à partir d'un seuil déterminé par l'accroissement de son impédance qui limite les surintensités, tandis qu'en dessous de ce seuil le dispositif reste inopérant.

L'enroulement du transducteur alimenté en CC comme expliqué ci-dessus constitue une bobine d'ampères-tours dont la force magnétomotrice totale joue le rôle de grandeur de référence.

La comparaison des signaux de référence et de mesure se fait par la présence simultanée de ces bobines autour d'un noyau magnétique commun, et remplit le rôle de comparateur . Compte tenu des ordres de grandeur classique entre les ampères-tours màgnétissant d'une part et les ampères-tours des courants continu et alternatif d'autre part un tel comparateur réalise un gain de l'ordre de 100.

Les bobines parcourues par le courant alternatif du transducteur 6 servent aussi d'organe de limitation du courant d'électrode par modulation de la perméabilité du noyau magnétique. Cette modulation est effectuée par la force magnétomotrice résultante, de l'action conjuguée des bobines parcourues respectivement par le courant continu et le courant alternatif, qui fait varier l'état magnétique des noyaux.

La figure 4 illustre les grandeurs relatives des ampères-tours C.C. et C.A. pour les valeurs normales des impédances d'arc qui définissent le courant théorique d'électrode.

En considérant la caractéristique magnétique donnant le flux ($\phi$) en fonction de la force magnétomotrice (nI), l'état magnétique du noyau se situe en A. Lorsque le courant continu agit seul sur le noyau magnétique du transducteur.

Le point B, dépendant de l'action conjuguée du courant continu et du courant alternatif, correspond au courant théorique d'électrode pour la valeur normale d'impédance des arcs.

La zone de la caractéristique située entre le point C et l'origine O correspond à l'action limitatrice du transducteur qui y développe la variation de flux nécessaire pour induire la force électro-motrice qui limite le courant d'électrode. Lorsque l'opérateur désire modifier le seuil d'intervention du transducteur 6 , représenté par le point B de la figure 4, il suffit de modifier la valeur du courant continu parcourant l'enroulement 14 pour déplacer le point A sur la courbe de saturation reprise à la figure 4. Dans les dispositifs connus assurant à la fois la régulation de la position d'électrode et la régulation du courant d'électrode , le processus est déclenché sur base d'une mesure du courant d'électrode et d'une mesure de tension relevée entre le secondaire du transformateur de four 4 et l'enveloppe extérieure 16 du four à arc 2 mise à la terre. Or cette dernière mesure de tension n'est qu'une image imparfaite de la tension d'arc. Si par exemple , suite à un basculement de ferraille la largeur d'un arc électrique est réduite, la tension de cet arc diminue et le courant de l'électrode augmente. Mais l'augmentation de ce courant d'électrode augmente la chute de tension dans l'électrode et dans le câble souple reliant l'électrode au secondaire du transformateur de four et masque partiellement la réduction de tension d'arc.L'erreur introduite dans la mesure de tension influence le régulateur de position 8 et conduit à une modification incorrecte de la position d'électrode 5 par le moteur 7. Dans le but de préserver au maximum les électrodes 5, le répétiteur d'ordre 10 signale instantanément au coordinateur 9 l'intervention de transducteur 6. De la sorte la remontée de l'électrode 5 est fait en grande vitesse par le moteur 7 via le régulateur à position 8 et le coordinateur 9.

Toutefois le fonctionnement du répétiteur d'ordre 10 doit être sélectif. Si, un court-circuit apparaît sur l'électrode 5C,le point neutre va se déplacer dans le magma de ferrailles du four et conduire, par exemple, à un accroissement du courant dans l'électrode 5B et à une réduction de courant dans l'électrode 5 A. En supposant que l'accroissement de courant dans l'électrode 5B atteigne la valeur de la deuxième consigne du coordinateur 9, l'intervention du limiteur de courant 6 se fera automatiquement au niveau de la phase C et de la phase B, mais le répétiteur d'ordre 10 ne donnera l'ordre de modifier la position des électrodes, à travers le coordinateur 9, le régulateur de position 8 et le moteur 7, qu'au niveau de l'électrode 5C seulement, suite à une information correctrice provenant de la phase B de la mesure de tension d'arc introduite au répétiteur d'ordre 10.

Dans le dispositif il faut donc distinguer deux régimes de fonctionnement des moteurs 7.

Dans un premier régime, les moteurs 7 fonctionnent à vitesse normale pour ajuster la longueur d'arc et maintenir ainsi la valeur du courant d'électrode en concordance avec une première consigne du coordinateur 9.

Dans un second régime, les moteurs 7 fonctionnent à grande vitesse pour retirer l'électrode lorsque dans une phase sont détectés, par le répétiteur d'ordre 10, à la fois la désaturation du transducteur monophasé 6, commandé par la seconde consigne de coordinateur 9, et la disparition de l'arc par une mesure de tension d'arc . Par contre, si le répétiteur d'ordre 10 enregistre le fonctionnement du transducteur monophasé 6 sans détecter la disparition d'arc, il n'émet pas d'ordre d'urgence pour mettre les moteurs 7 en grande vitesse et dans une première version ceux-ci restent en vitesse normale. Dans une seconde version, la même situation laisse les moteurs à l'arrêt.

L'intervention du dispositif, ci-dessus mentionné, se déroule donc selon le processus suivant. Tant que le courant d'électrode n'atteint pas le seuil prédéterminé par la seconde consigne du coordinateur 9, le circuit magnétique du transducteur est saturé par le courant de commande et seul une puissance réactive résiduelle tout à fait négligeable est développée par le transducteur dans le circuit électrique de puissance. Dès que le courant d'électrode dépasse ce seuil prédéterminé, l'enroulement de puissance du transducteur parcouru par un courant alternatif plus important désature le circuit magnétique et le rend sensible à cette nouvelle variation de flux qui engendre une force électromotrice induite apte à réduire instantanément le courant d'électrode par insertion d'une puissance réactive adéquate. Lorsque le moteur 7 déplace l'électrode 5 pour allonger l'arc, le courant parcourant l'électrode diminue et permet à nouveau la saturation du noyau magnétique du transducteur annulant ainsi la puissance réactive développée. L'électrode est à nouveau alimentée à la valeur normale de puissance active et la fusion peut se poursuivre suivant le processus habituel.

Les avantages présentés par ce dispositif de protection contre les courants d'arc excessifs résident en la rapidité de réaction, la faculté d'intervenir à n'importe quel moment de la fusion par une réaction proportionnelle à l'écart constaté, la grande robustesse de réalisation réduisant fortement les frais d'entretien et la facilité de réglage de la seconde consigne du coordinateur 9.

Bien entendu, l'invention ne se limite pas à la réalisation donnée à titre d'exemple. Elle comprend tous les équivalents techniques exécutés suivant son esprit.

0052091

REVENDICATIONS.

1. Dispositif de protection contre le courant excessif parcourant une électrode dont la position est réglable en hauteur par un moteur commandé par un régulateur de position (8) pour une installation de four à arc (2), alimenté par un réseau électrique (1) par l'intermédiaire d'un transformateur abaisseur (3) et d'un transformateur de four (4) caractérisé en ce que ce dispositif de protection comprend un limiteur de courant (6) normalement saturé, inséré en série avec au moins l'enroulement d'une phase du primaire du transformateur de four (4) et qui, en se désaturant, limite automatiquement le courant de cette phase dès que sa valeur dépasse un seuil prédéterminé selon une consigne fournie par un coordinateur (9) qui, d'autre part, contrôle l'intervention d'un régulateur de position (11) en lui fournissant une autre consigne pour maintenir le courant d'électrode à sa valeur nominale par déplacement des électrodes.

2. Dispositif de protection selon la revendication 1, caractérisé en ce que le limiteur de courant est un transducteur monophasé, à couplage série, inséré en série dans chaque phase du primaire du transformateur de four (4).

3. Dispositif de protection selon la revendication 2, caractérisé en ce que le transducteur monophasé à couplage série est constitué de deux circuits magnétiques (11) possédant chacun un noyau saturable (12) et un circuit de retour non saturé (13), en ce que des enroulements (14), parcourus par le courant alternatif, sont disposés autour du noyau saturable (12) et connectés entre eux en série et en opposition et en ce qu'au moins un enroulement (15), parcouru par le courant continu, est commun aux deux circuits magnétiques (11) et entoure les deux enroulements (14), parcourus par le courant alternatif, montés symétriquement.

4. Dispositif de protection selon la revendication 1, caractérisé en ce que le limiteur de courant est un transducteur triphasé, à couplage série, inséré en série avec le primaire du transformateur de four (4).

5. Dispositif de protection selon une des revendications précédentes, caractérisé en ce qu'un répétiteur d'ordre (10) coopère avec le coordinateur (9) et le régulateur de position (8) pour déclencher le changement de position de l'électrode en vitesse rapide par l'intermédiaire d'un moteur multi-vitesses (7) dans la phase où sont détectés

10.02/1867.

2

0052091

simultanément la désaturation du transducteur monophasé (6) ou du transducteur triphasé et la disparition de l'arc.

Fig. 1

Fig. 3

Fig. 4

0052091

Fig. 2

0052091

Numero de la demande

**RAPPORT DE RECHERCHE EUROPEENNE**

Office européen
des brevets

EP 81 87 0046.0

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.³) |
|---|---|---|---|
| X | DE - C - 485 607 (W.E. MOORE) <br> * document entier * <br> -- | 1,2,4 | H 05 B 7/00 <br> G 05 F 3/06 <br> H 02 H 7/00 |
| X | US - A - 3 681 679 (K. CHUNG) <br> * abrégé * <br> -- | 3 | H 01 H 27/24 |
| A | DE - C - 972 422 (SIEMENS-SCHUCKERTWERKE) <br> * page 1, ligne 1 à page 2, ligne 46; fig. * <br> -- | | |
| A | FR - A - 1 299 494 (THE GENERAL ELECTRIC CO.) <br> * revendications; fig. 1 à 11 * <br> ---- | | |

**DOMAINES TECHNIQUES RECHERCHES (Int. Cl.³)**

G 05 F 1/04
G 05 F 1/06
G 05 F 1/22
G 05 F 1/32
G 05 F 3/06
H 01 F 27/24
H 02 H 7/00
H 05 B 7/00
H 05 B 7/144
H 05 B 7/148
H 05 B 7/152

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 26-01-1982 | LEMMERICH |

OEB Form 1503.1 06.78